Europäisches Patentamt

European Patent Office

Office européen des brevets

(11) Veröffentlichungsnummer: **0 176 969**

A1

(12) **EUROPÄISCHE PATENTANMELDUNG**

(21) Anmeldenummer: 85112232.5

(22) Anmeldetag: 26.09.85

(51) Int. Cl.⁴: **F 16 B 23/00**
B 25 B 21/00

(30) Priorität: 03.10.84 DE 3436204

(43) Veröffentlichungstag der Anmeldung:
09.04.86 Patentblatt 86/15

(84) Benannte Vertragsstaaten:
AT BE CH DE FR GB IT LI LU NL SE

(71) Anmelder: EJOT Eberhard Jaeger GmbH & Co. KG
Untere Bienhecke Postfach 11 47
D-5928 Bad Laasphe- 1(DE)

(72) Erfinder: Grossberndt, Hermann
Lahnstrasse 1
D-5928 Bad Laasphe(DE)

(74) Vertreter: Schlee, Richard, Dipl.-Ing. et al,
Patentanwälte Dipl.-Ing. R. Schlee Dipl.-Ing. A. Missling
Bismarckstrasse 43
D-6300 Lahn-Giessen 1(DE)

(54) Schraube und Eindrehwerkzeug hierfür.

(57) Der Schraubenkopf (2) hat eine obere Zentriervertiefung (10), deren tiefste Stelle (12) mit der Schraubenachse (13) zusammenfällt. Nach grober Ausrichtung des Eindrehwerkzeuges (E) auf die Schraube (S) tastet ein Zentrierstift (17) im Bereich der Zentriervertiefung (10) an der Schraube (S) an. Der Zentrierstift gleitet in das Zentrum (12) der Zentriervertiefung (10) und wird bei axialem Druck auf das Eindrehwerkzeug (E) unter Überwindung der Kraft einer Feder (22) in das Eindrehwerkzeug (E) eingedrückt, wobei gleichzeitig die Mitnehmervertiefung (15) ohne Beschädigung des Schraubenkopfes (2), der vorzugsweise aus Kunststoff besteht, über den Schraubenkopf (2) gestülpt wird.

./...

FIG. 1

EJOT Eberhard Jaeger GmbH & Co. KG
D-5928 Bad Laasphe

0176969

## Schraube und Eindrehwerkzeug hierfür

Die Erfindung bezieht sich auf eine Schraube mit einem Gewindeteil und einem Kopf, an dessen Umfang sich Mitnehmerflächen, insbesondere ein Sechskant, für ein Eindrehwerkzeug befinden.

Beim Eindrehen von Schrauben muß die Nuß des Eindrehwerkzeuges den Schraubenkopf möglichst rasch erfassen, ohne den Schraubenkopf zu beschädigen. Insbesondere bei der Verarbeitung von Schrauben, deren Köpfe aus Kunststoff bestehen, besteht die Gefahr einer Beschädigung des Schraubenkopfes durch das Eindrehwerkzeug, wenn dieses den Schraubenkopf nicht sofort zentrisch erfaßt.

Der Erfindung liegt die Aufgabe zugrunde, eine Schraube der eingangs genannten Art so auszubilden, daß sich an ihr ein Eindrehwerkzeug zentrieren kann, bevor der Schraubenkopf von der Nuß des Eindrehwerkzeuges erfaßt wird. Durch die Erfindung soll auch ein Eindrehwerkzeug geschaffen werden, das für die Verarbeitung der erfindungsgemäßen Schrauben geeignet ist.

Die erfindungsgemäße Schraube der eingangs genannten Art ist dadurch gekennzeichnet, daß am Kopfende eine durch eine Umdrehungsfläche definierte Zentriervertiefung vorgesehen ist, deren tiefste Stelle in der Längsachse der Schraube liegt.

An einer so ausgebildeten Schraube kann sich das Eindrehwerkzeug mit Hilfe der Zentriervertiefung auf die Schraube ausrichten. Wenn das Eindrehwerkzeug nur grob auf die Schraube ausgerichtet ist, leitet die Umdrehungsfläche der Zentriervertiefung das Eindrehwerkzeug so, daß sich dessen Achse auf die Schraubenachse ausrichtet, so daß beim anschließenden Aufschieben der Nuß der Schraubenkopf ohne die Gefahr einer Beschädigung desselben erfaßt wird.

Die Schraube ist vorzugsweise eine Schraube mit Kopf aus Kunststoff (Anspruch 2). Insbesondere Schrauben mit Köpfen aus Kunststoff sind der Gefahr ausgesetzt, daß der Schraubenkopf beschädigt wird, da Kunststoff ein wesentlich weicheres Material als z.B. Stahl ist. Besonders vorteilhaft ist die Anwendung der Erfindung bei Schrauben für bautechnische Zwecke (Anspruch 3). Bei dieser Anwendung nämlich muß eine große Zahl von Schrauben rasch und sicher verarbeitet werden können, wobei ein maschineller Antrieb der Schrauben unumgänglich ist, insbesondere auch bei der Verarbeitung von Bohrschrauben, mit denen ja das Gewindeloch zunächst gebohrt wird, was nur mit einer entsprechend hohen Drehzahl und einer entsprechend hohen Antriebsleistung möglich ist.

Die Zentriervertiefung kann verschiedene Formen haben. Besonders günstig ist die Ausbildung als Hohlkegelfläche (Anspruch 4). Geeignete Kegelwinkel hierfür sind im Anspruch 5 angegeben.

Ein für die Verarbeitung der erfindungsgemäßen Schrauben geeignetes Eindrehwerkzeug mit einer Nuß, an der sich Mitnehmerflächen zum Zusammenwirken mit den Mitnehmerflächen des Schraubenkopfes befinden, ist gekennzeichnet durch einen über die Mitnehmerflächen vorragenden Zentrierstift, der axial in die Nuß eindrückbar ist (Anspruch 6). Während des Zentriervorganges ist der Zentrierstift aus der Nuß herausgedrückt. Nach vollzogener Zentrierung wird der Stift entgegen einem Widerstand in die Nuß eingedrückt, wenn diese dem Schraubenkopf angenähert wird. Der Zentrierstift hat vorzugsweise eine vordere Verjüngung (Anspruch 7), die stärker verjüngt sein kann als die Zentriervertiefung in der Schraube (Anspruch 8). Die Zentrierspitze ist vorzugsweise ein Kegel (Anspruch 9 ), kann jedoch auch eine andere Form aufweisen, z.B. die Form einer Kugelkalotte.

Eine besonders einfache Konstruktion für einen eindrückbaren Zentrierstift ist im Anspruch 10 angegeben.

In der Zeichnung ist ein Ausführungsbeispiel der Erfindung dargestellt. Es zeigt:

Fig. 1    teils im Schnitt, teils in Ansicht eine Schraube mit einer Zentriervertiefung und ein Eindrehwerkzeug in einer Lage relativ zur Schraube vor der zentrischen Ausrichtung des Eindrehwerkzeuges auf die Schraube,

Fig. 2    eine entsprechende Darstellung in einer Phase, bei der das Eindrehwerkzeug axial auf die Schraube ausgerichtet ist, das Eindrehwerkzeug die Schraube jedoch noch nicht erfaßt und

Fig. 3    eine Phase, in der das Eindrehwerkzeug den Schraubenkopf formschlüssig umfaßt.

In der Zeichnung ist eine Schraube insgesamt mit S und ein Eindrehwerkzeug insgesamt mit E bezeichnet.

Die Schraube S besteht teils aus Stahl (Teil 1) und teils aus Kunststoff (Teil 2). Der Teil 1 hat eine Bohrspitze 3, ein selbstfurchendes Gewinde 4, einen Flansch 5 und einen Kopfteil 6, an dem sich ein Verankerungsgewinde 7 befindet.

Der Teil 3 der Schraube hat eine Umfangsfläche 8 in Form eines regelmäßigen Sechskantes. Am unteren Ende der sechskantigen Umfangsfläche befindet sich eine Schulter 9 für die Begrenzung der Einstecktiefe des Eindrehwerkzeuges E.

Am Kopfende befindet sich eine Zentriervertiefung 10, die durch eine hohlkegelige Umdrehungsfläche 11 gebildet ist. Die Spitze 12 der Kegelfläche 11 liegt im Zentrum der Schraubenachse 13. Der Öffnungswinkel $\alpha$ des Kegels ist verhältnismäßig groß; er beträgt bei dem gezeichneten Ausführungsbeispiel 140 Winkelgrade. Der Außendurchmesser $D_A$ der Zentriervertiefung 10 ist verhältnismäßig groß, so daß die Zentriervertiefung den größten Teil der Oberseite des Schraubenkopfes einnimmt.

Das Eindrehwerkzeug E hat eine Nuß 14, in der sich eine Höhlung 15 befindet, die an ihrem Umfang durch eine Sechskant-Hohlfläche begrenzt ist, die sich formschlüssig über die Umfangsfläche 8 des Schraubenkopfes 2 schieben läßt. An seinem unteren Ende hat das Eindrehwerkzeug E eine Anschlagfläche 16, mit dem es sich auf die Schulter 9 des Schraubenkopfes 2 aufsetzen kann. Die Höhe $h_1$ der Höhlung 15 ist etwas größer als die Höhe $h_2$ der Sechskant-Umfangsfläche des Schraubenkopfes 2.

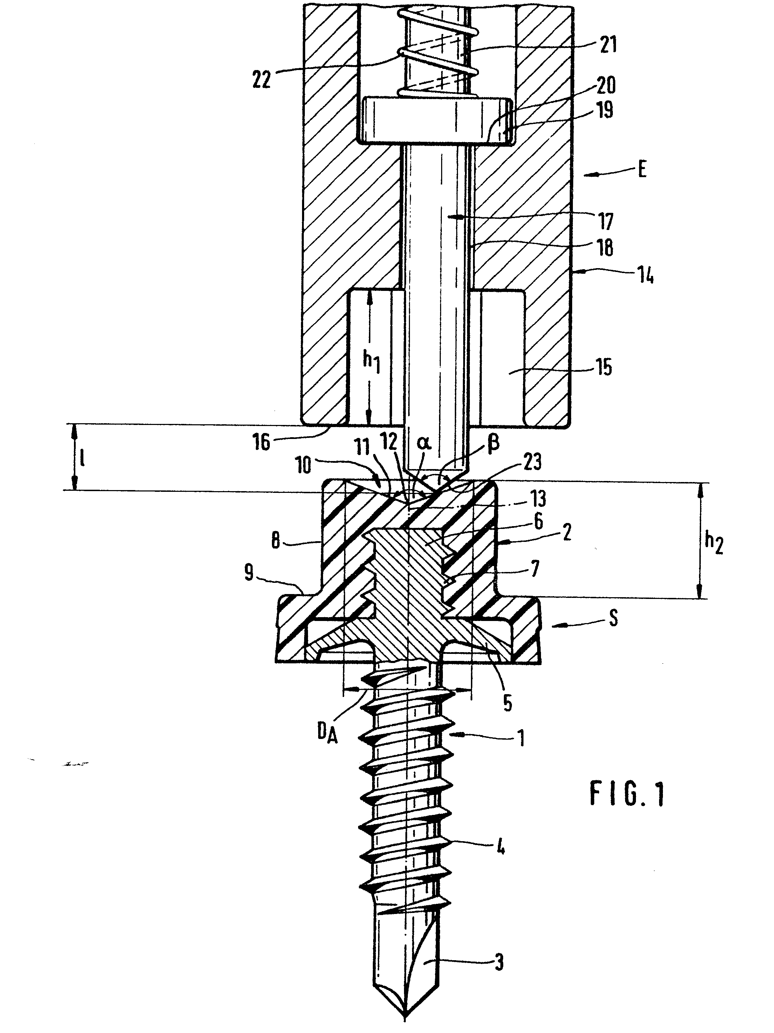

In der Nuß 14 ist ein Zentrierstift 17 axial verschiebbar. Der Zentrierstift 17 ist in einer zentralen Führungsbohrung 18 der Nuß 14 geführt und hat einen Bund 19, der an einer Schulter 20 anliegt, die sich innerhalb der Nuß 14 befindet. Oberhalb des Bundes 19 hat der Zentrierstift 17 eine Verlängerung 21, die von einer Schraubendruckfeder 22 umgeben ist. Das obere Ende der Schraubendruckfeder 22 ist (in der Zeichnung nicht dargestellt) an der Nuß 14 abgestützt. Die Schraubendruckfeder 22 ist stets unter Spannung und versucht den Zentrierstift 17 nach unten zu drücken. Die in Fig. 1 gezeigte vorderste Stellung des Zentrierstiftes wird durch Anlage des Bundes 19 an der Schulter 20 definiert.

Der Zentrierstift 17 hat eine kegelige Zentrierspitze 23. Der Öffnungswinkel $\beta$ der Zentrierspitze 23 ist kleiner als der Öffnungswinkel $\alpha$ der Zentriervertiefung 10, d.h. der Kegel der Zentrierspitze 23 ist steiler als der Kegel der Zentriervertiefung 10 und beträgt im dargestellten Fall 110°.

In der vordersten Stellung des Zentrierstiftes 17 ragt dieser mit dem Maß 1 über die Anschlagfläche 16 der Nuß 14 hinaus.

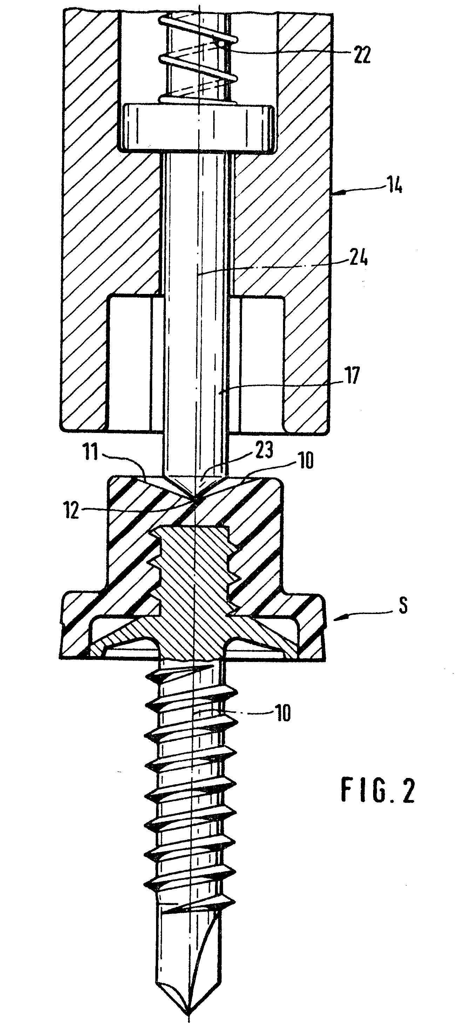

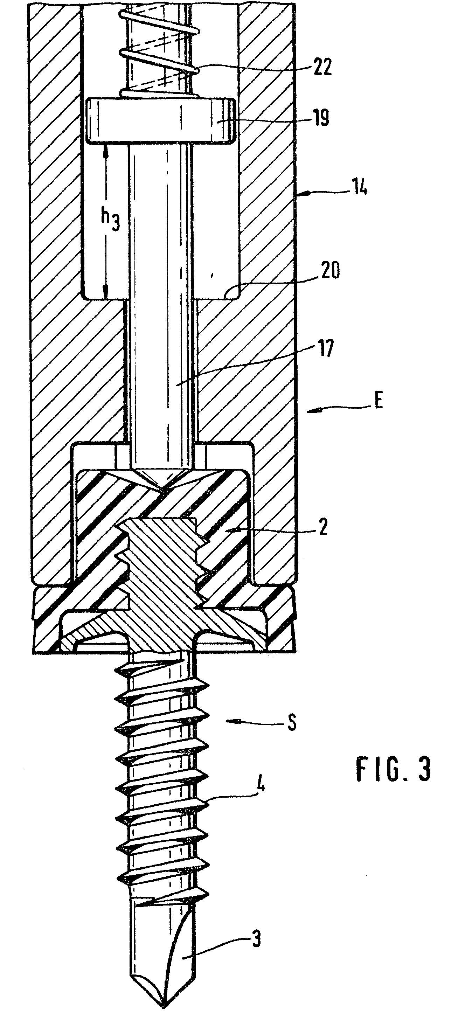

Das Eindrehwerkzeug E zentriert sich an der Schraube S wie folgt. Bei der Annäherung des Eindrehwerkzeuges E an die Schraube S wird das stillstehende Eindrehwerkzeug nur grob auf die Schraube ausgerichtet und auf diese zubewegt. In der Regel kommt hierbei die Zentrierspitze 23 des Zentrierstiftes 17 außerhalb des Zentrums 12 der Zentriervertiefung 10 mit der Umdrehungsfläche 11 in Berührung. Ein solcher Zustand ist in Fig. 1 dargestellt.Die Zentrierspitze 23 gleitet nun auf der Umdrehungsfläche 11 in das Zentrum 12 der Zentriervertiefung 10 und erreicht schließlich die in Fig. 2 dargestellte Lage. Wenn die Nuß 14 auf die Schraube S ausgerichtet ist, fluchtet ihre Achse 24 mit der Schraubenachse 10. Durch Ausübung einer Abwärtskraft auf die Nuß 14 wird schließlich die Kupplungsstellung nach Fig. 3 erreicht. In dieser Kupplungsstellung umfaßt die Nuß 14 den Schraubenkopf 2 formschlüssig. Der Zentrierstift 17 ist nach weiterer Zusammendrückung der Feder 22 in die Nuß 14 eingeschoben, wobei der Bund 19 von der Schulter 20 abgehoben ist. Der gesamte Anhebeweg für den Zentrierstift 17 ist mit $h_3$ bezeichnet.

Auf die Schraube S kann jetzt ein großes Drehmoment bei hoher Drehzahl ausgeübt werden, wobei zunächst mit der Bohrspitze 3 ein Loch gebohrt werden kann. Nach dem Bohren des Loches furcht sich das Gewinde 4 bei reduzierter Drehzahl des Eindrehwerkzeuges E ein Innengewinde in das von der Bohrspitze 3 hergestellte Loch.

0176969

- 1 -

Ansprüche:

1. Schraube mit einem Gewindeteil und einem Kopf, an dessen Umfang sich Mitnehmerflächen, insbesondere ein Sechskant, für ein Eindrehwerkzeug befinden, dadurch gekennzeichnet, daß am Kopfende eine durch eine Umdrehungsfläche (11) definierte Zentriervertiefung (10) vorgesehen ist, deren tiefste Stelle (12) in der Längsachse (10) der Schraube (S) liegt und die sich vorzugsweise über die gesamte Oberseite des Schraubenkopfes (2) erstreckt.

2. Schraube nach Anspruch 1, dadurch gekennzeichnet,daß mindestens der Schraubenkopf (2) aus Kunststoff besteht, vorzugsweise aus thermoplastischem Kunststoff.

3. Schraube nach Anspruch 2, dadurch gekennzeichnet, daß sie eine bautechnische Schraube (S) ist, vorzugsweise eine Bohrschraube mit selbstfurchenden Gewindegängen (4).

4. Schraube nach einem der vorhergehenden Ansprüche, dadurch gekennzeichnet, daß die Zentriervertiefung (10) eine Hohlkegelfläche (11) ist.

5. Schraube nach Anspruch 4, dadurch gekennzeichnet, daß der Öffnungswinkel (α) der Hohlkegelfläche (11) im Bereich von 170 bis 70 Winkelgraden liegt, vorzugsweise ca. 140 Winkelgrade beträgt.

6. Eindrehwerkzeug für eine Schraube nach einem der vorhergehenden Ansprüche, mit einer Nuß, an der sich Mitnehmerflächen zum Zusammenwirken mit den Mitnehmerflächen des Schraubenkopfes (2) befinden, gekennzeichnet durch einen über die Mitnehmerflächen (15) vorragenden Zentrierstift (17), der axial in die Nuß (14) eindrückbar ist.

7. Eindrehwerkzeug nach Anspruch 6, dadurch gekennzeichnet, daß der Zentrierstift (17) eine Zentrierspitze (23) aufweist, die sich zum Stiftende hin verjüngt.

8. Eindrehwerkzeug nach Anspruch 7, dadurch gekennzeichnet, daß die Zentrierspitze (23) stärker verjüngt ist als die Zentriervertiefung (10) in der Schraube (S), z.B. einen steileren Kegel bildet als die Zentriervertiefung.

9. Eindrehwerkzeug nach Anspruch 8, dadurch gekennzeichnet, daß die Zentrierspitze (23) ein Kegel mit einem Öffnungswinkel (β) im Bereich von 160° bis 60° ist, vorzugsweise mit einem Öffnungswinkel (β) von ca. 110°.

10. Eindrehwerkzeug nach Anspruch 9, dadurch gekennzeichnet, daß der Zentrierstift (17) einen Bund (19) aufweist, der in der vorgeschobenen Stellung des Zentrierstiftes (17) an einer Schulter (20) in der Nuß (14) anliegt und daß auf den Zentrierstift eine Feder (22) einwirkt, die den Zentrierstift (17) nach vorne zu schieben versucht, vorzugsweise eine Schraubendruckfeder (22), die den Zentrierstift (17) umgibt und mit einem Ende an dem Bund (19) abgestützt ist.

FIG.1

0176969

FIG. 2

0176969

FIG. 3

Europäisches
Patentamt

## EUROPÄISCHER RECHERCHENBERICHT

| EINSCHLÄGIGE DOKUMENTE | | | EP 85112232.5 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int. Cl 4) |
|---|---|---|---|
| A | US - A - 4 457 654 (HENRY A. SYGNATOR) <br> * Anspruch 1; Fig. 1,2; Spalte 2 * | 1 | F 16 B 23/00 <br> B 25 B 21/00 |
| A | EP - A1 - 0 112 030 (TITUS TOOL COMPANY LIMITED) <br> * Anspruch 1; Fig. 3 * | 1 | |
| A | WO - A1 - 83/02 137 (RUSSELL, BURDSALL & WARD CORPORATION) <br> * Seiten 1,2,5; Fig. 1,2 * | 1,2 | |
| A | US - A - 4 258 596 (ROBERT H. BISBING et al.) <br> * Fig. 1-6; Spalten 3,4 * | 1,6 | RECHERCHIERTE SACHGEBIETE (Int. Cl 4) |
| A | GB - A - 2 123 509 (UNITED KINGDOM ATOMIC ENERGY AUTHORITY) <br> * Gesamt * | 1,4 | F 16 B <br> B 25 B |
| A | DE - B - 1 603 748 (CLYDE CORP.) <br> * Fig. 5,6 * | 1,6 | |

Der vorliegende Recherchenbericht wurde für alle Patentansprüche erstellt.

| Recherchenort | Abschlußdatum der Recherche | Prüfer |
|---|---|---|
| WIEN | 12-12-1985 | HEIN |